Europäisches Patentamt

European Patent Office

Office européen des brevets

(11) Publication number: **0 459 636 A2**

# EUROPEAN PATENT APPLICATION

(21) Application number: 91304003.6

(22) Date of filing: 02.05.91

(51) Int. Cl.⁵: **B60N 2/44**

(30) Priority: 26.05.90 GB 9011856

(43) Date of publication of application:
04.12.91 Bulletin 91/49

(84) Designated Contracting States:
**DE ES FR GB IT SE**

(71) Applicant: **DUNLOP COX LTD**
**Glaisdale Parkway**
**Nottingham NG8 4GP(GB)**

(72) Inventor: **Babbs, Frederick William**
**102A Cropwell Road**
**Radcliffe on Trent, Nottingham NG12**
**2UG(GB)**

(74) Representative: **Treves, Barry William et al**
**BTR Group Patent & Trade Mark Service P.O.**
**Box 504**
**Erdington Birmingham B24 9QH(GB)**

(54) **Vehicle seat attachment.**

(57) An attachment device particularly for a vehicle seat base comprising at least one securing projection (6) which may be inserted into a securing aperture (20) on the vehicle floor when the seat base is tilted out of its normal horizontal position but becomes wedged in the aperture (20) when the seat base is horizontal.

Fig. 2

EP 0 459 636 A2

This invention relates to the attachment of a vehicle seat to the floor of a vehicle.

The base of a vehicle seat is conventionally generally rectangular in plan form, two sides of the base extending generally in the fore-and-aft (longitudinal) direction of the vehicle when fitted. The base is conventionally attached to the floor by bolts, one at or near each corner, directly, or indirectly e.g. by means of an intermediate bracket, to part of the vehicle floor. The attachment must be sufficiently secure to ensure the safety of a person sitting on the seat, especially in the event of vehicle collision.

Often the two longitudinal sides of the base comprise a pair of slides enabling the fore-and-aft position of the seat to be adjusted and it is a lower member of each slide which is bolted to the vehicle floor, the bolts being located one at the front and one at the rear of each lower member, an upper member of the slide being capable of sliding movement with respect to the lower.

In practice the vehicle seat base is assembled as a sub-assembly, and is then fitted, with or without the seat attached thereto, to the vehicle on an assembly line. The fitment operation includes the steps of positioning the base accurately in relation to the vehicle floor so that the four bolt holes in the base are accurately aligned with corresponding threaded securing holes formed in the vehicle floor or in brackets or members attached to or forming part of the floor, inserting a bolt (and a washer as necessary) through each aligned pair of holes and finally tightening them. While this operation is relatively simple and usually takes only a few seconds, it is highly advantageous on a moving assembly line to simplify this process, thus shortening the time for the fitment operation further. It is an object of the present invention to provide a vehicle seat base which may be more simply attached to a vehicle floor.

In accordance with a first aspect of the invention an attachment device comprises an attachment projection capable of being freely insertable into a securing aperture and on rotation becomes wedged in the aperture by engagement of a cam surface on the projection with a side of the aperture. The device may be generally planar in form, and the said rotation may take place about an axis generally perpendicular to the plane of the device.

In accordance with a second aspect of the invention a vehicle seat base comprises at least one attachment projection which is freely insertable in a securing aperture formed in the vehicle body, and, when the base is rotated to its fitted position on the vehicle floor, becomes wedged into the aperture by engagement of a cam surface on the projection with a side of the aperture. For example the attachment projection may be freely insertable in the aperture when the base is in a position not parallel to the plane of the aperture, and, when the base is rotated to its fitted position, is parallel to the plane of the aperture.

The plane of the aperture is usually horizontally disposed e.g. generally parallel to the vehicle floor, but may have other dispositions.

Preferably the projection is generally hook-shaped and has a generally semi-circular surface and a generally flat surface. When the base is in position on a vehicle floor, the generally semi-circular surface may be in a lower position and the generally flat surface uppermost. A nose portion may be provided at or adjacent the junction of the semi-circular and flat surfaces.

Preferably the cam surface comprises part of the generally semi-circular surface. The flat surface may be provided with a further cam surface for wedging the projection into position in the aperture.

Preferably also, the base includes at least one seat slide comprising a lower member constructed to be fixed to the vehicle floor and an upper member for carrying the seat and constructed and arranged to be slideable with respect to the lower member, the attachment projection being provided on said lower member.

In accordance with a third aspect of the invention, a vehicle seat slide comprises a lower member constructed to be fixed to a vehicle floor, an upper member constructed and arranged to be slideable with respect to the lower member, the lower member having at least one attachment projection which is freely insertable in a securing aperture when the lower member is generally tilted with respect to the plane of the aperture, and when the lower member is rotated to a generally non-tilted position becomes wedged into the aperture by the engagement of a cam surface on the projection with a side of the aperture.

In accordance with a fourth aspect of the invention, a method of fitting a vehicle seat base to a vehicle floor comprises the steps of:

forming at least one attachment projection on said seat base;

inserting the projection into a securing aperture formed in or on the vehicle floor or a bracket or member attached to or forming part of the floor;

rotating the base to its fitted position whereby the projection becomes wedged into the aperture by engagement of a cam surface on the projection with a side of the aperture; and

securing the base to the floor by securing means e.g. at least one bolt, to hold the projection in its wedging engagement.

Usually, when the base is in its fitted position, it is generally horizontal.

One embodiment of the invention, a vehicle seat base, will now be described by way of example only, with reference to the accompanying drawings, of which:-

Figure 1

shows a side view of the front end of a vehicle seat slide attached to the vehicle floor;

Figure 2

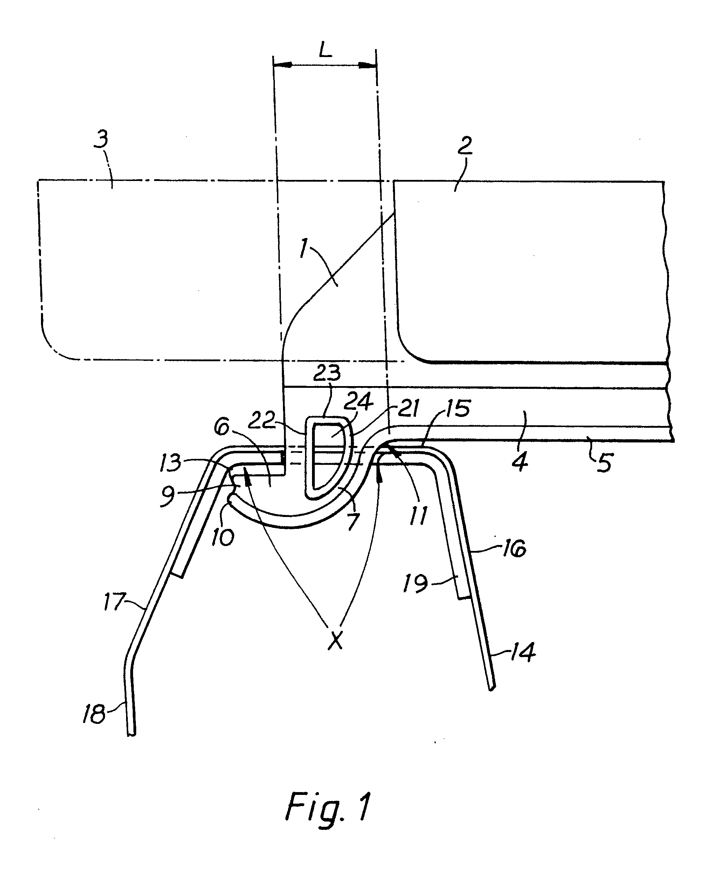

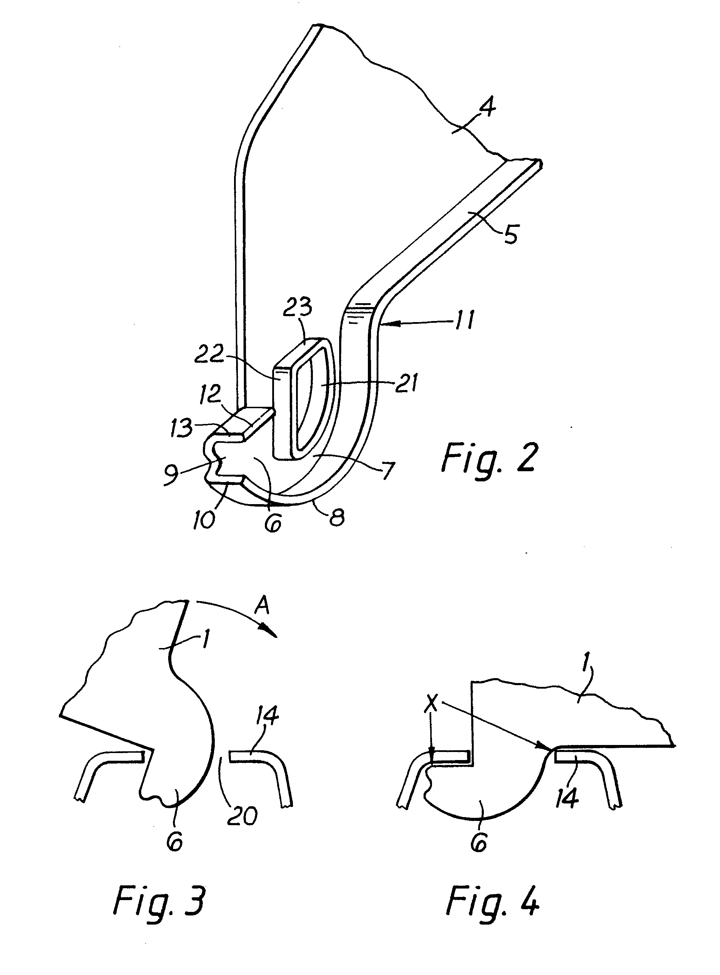

shows a scrap perspective view, on an enlarged scale with respect to Figure 1, of the front end of the vehicle seat slide lower member; and

Figures 3 and 4

show the insertion and final stages of fitment of the seat slide to the vehicle floor.

A vehicle seat base comprises two parallel sides which, when fitted to a vehicle, extend in a fore-and-aft (longitudinal) direction, and suitable cross-members extending laterally of the vehicle, the base being generally rectangular in planar form.

The two sides each comprise a slide (part of which is shown in the drawings) which enable the position of the seat to be adjusted in the fore-and-aft direction to suit the individual requirements of the person sitting on it. Each slide comprises a lower member 1 which in use is securely fixed to the vehicle floor either directly or via one or more brackets or other members forming part of or attached to the floor, and an upper member 2 which slides relative to the lower, fixed member 1 to a forward positon 3 as shown in dotted outline in Figure 1, or to other positions in between. The slide may be of the type as described in GB-A-9000181.9 or of any other suitable type.

As can be seen in the drawings, the lower member, formed by conventional stamping and shaping steps from sheet or strip steel comprises a vertical web 4, a horizontal flange 5, formed by bending the lower edge of the web 4 sideways, which extends along the whole length of the member 1, and a downwardly-and forwardly-extending hook-like attachment projection 6.

The projection 6 has a vertical web portion 7 which is a forwards and downwards extension of the main vertical web 3 of the lower member 1. The shape of the projection is such that when viewed from the side, as shown in Figure 1, it is generally hook-shaped having a generally semi-circular lower edge 8 and a forwardly-extending nose portion 9. The horizontal flange 5 extends forwardly from the edge of the member in arcuate form smoothly around the lower edge 8 of the projection to end at the extremity 10 of the nose portion 9. The rear surface of the flange around the lower edge 8 provides a cam surface 11 the use of which will be described later.

The upper edge of the nose portion is bent to provide an upper flange 12, extending generally parallel to and on the same side of the member as the horizontal flange 5. The front extremity 13 of the upper flange is rounded as shown especially in Figure 1. The upper surface of the upper flange 12 is therefore generally horizontal when the seat base is in position in the vehicle.

The projection has an aperture 24 formed e.g. by stamping and the edges thereof are bent outwards to form an upper horizontal flange 23, a front vertical flange 22 and a rear curved flange 21. These flanges, extending on the same side of the projection 6 as edge flange 5 stiffen the projection.

At the rear end of the lower member the horizontal flange widens out and is pierced to provide a circular aperture. A bolt may be located in this aperture to attach the rear end of the member securely to the floor of the vehicle. This feature is not shown in the drawings.

The vehicle body for which this seat base is intended has a supporting hollow cross-member 14 for rigidity. As shown in Figure 1 the cross-member has a generally horizontal top section 15, a near-vertical rear section 16, and a front section which is in two parts: an upper section 17 extending at about 30° to the vertical and a lower section 18 extending vertically. The upper section 15 of the cross-member is provided with two circular securing apertures 20, each hole having a diameter which is the same as or slightly less than the fore-and-aft length L of the projection measure from the front of the projection above the upper flange 12. The transverse distance between the centres of the two apertures 20 is the same as the transverse distance between the two seat slides, one at each side of the vehicle seat base. Internally, the cross-member is provided with a reinforcing plate 19 adjacent each seat-fixing aperture. The plate has a cross-sectional shape conforming the upper parts of the interior surfaces of the cross-beam as shown in Figure 1.

To fit the seat base to the vehicle the base is positioned so that the two sides are generally upright, or in a near-vertical position and the two projections 6 inserted generally downwardly, nose portion first, into the two securing apertures 20. This is illustrated in Figure 3. The seat base is then tilted backwards in the direction of the arrow A in Figure 3 to its generally horizontal position as shown in Figure 4 and in doing so the upper surface of the upper flange 12 of nose portion 9 of each projection 6 engages the lower surface of that part of the reinforcing plate 19 lying beneath the upper section 15 of the cross-member and in front of the securing aperture. At the same time the cam surface 11 of the flange 4 engages the rear side of the securing aperture, thus wedging the projection 6 firmly into the aperture 20. (In Figures 1 and 4, for clarity, a small gap is shown between the cam surface 11 and the side of the aperture. In practice the surface 11 and the side are in wedging contact). The rear ends of the two sides of the seat base are then bolted to the vehicle floor. This action applies a tilting force in the direction of the arrow A in addition to that applied by the weight of the seat base (and the seat above it) so wedging the projections even more tightly in position.

As described above and as shown in Figure 1 the front extremity 13 of the upper flange 12 on each projection 6 is rounded slightly, and fits into the front corner of the reinforcing plate 19 provided in the vehicle cross-member. (In Figure 4, for clarity, a small gap is shown between the flat upper surface and front extremity of the flange 12 and the lower surface of the reinforcing plate 19. In practice the flange and lower surface are in wedging contact). The projection is therefore firmly held in position because of the wedging action at the two positions X shown in Figures 1 and 4. Thus with the rear end of each lower member firmly bolted to the vehicle floor, the front attachment member provides an equally secure attachment and there is no likelihood of rattles occurring. The fact that there are no bolts to be fitted and tightened at the front of the members means that the fitting operation is simplified and therefore takes less time.

Although in the embodiment just described two hook-shaped projections, one at each front end of the two sides, are provided, it is possible to vary the number and position within practical limits. For example two projections may be provided on the inboard side, one at each end thereof, the nose portion of each projection extending transversely in an inboard direction, and to have too bolt attachments, one at each end of the outboard side. Other configurations and/or arrangements are possible within the spirit and scope of the invention.

Further, instead of having bolts to secure the rear ends of the sides to the floor other securing means such as "snap-in" rivets or fasteners (again capable of providing a downwards force) can be used, thus simplifying and quickening the fitting operation still more.

## Claims

1. An attachment device characterised by comprising an attachment projection (6) capable of being freely insertable into a securing aperture (20) and on rotation becomes wedged in the aperture (20) by engagement of a cam surface (11) on the projection (6) with a side of the aperture (20).

2. An attachment device in accordance with Claim 1 characterised by being generally planar in form and said rotation takes place about an axis generally perpendicular to the plane of the device.

3. A vehicle seat base characterised by comprising at least one attachment projection (6) which is freely insertable in a securing aperture (20) formed in the vehicle body, and, when the base is rotated to its fitted position on the vehicle floor, becomes wedged into the aperture by engagement of a cam surface (11) on the projection (6) with a side of the aperture (20).

4. A vehicle seat base in accordance with Claim 3 characterised in that the attachment projection (6) is freely insertable in the aperture (20) when the base is in a position not parallel to the plane of the aperture (20), and, when the base is rotated to its fitted position, is parallel to the plane of the aperture (20).

5. A vehicle seat base in accordance with either Claim 3 or Claim 4 characterised in that the the plane of the aperture (20) is generally horizontal and parallel to the floor of the vehicle to which the base is to be secured.

6. A vehicle seat base in accordance with any one of Claims 3, 4 or 5 characterised in that the projection (6) is generally hook-shaped and has a generally semi-circular surface (8) and a generally flat surface, the construction and arrangement being such that when the base is in its fitted position on a vehicle floor, the generally semi-circular surface (8) is in a lower position and the generally flat surface is uppermost.

7. A vehicle seat base in accordance with Claim 6 characterised in that a nose portion (9) is provided at or adjacent the junction of the semi-circular (8) and flat surfaces.

8. A vehicle seat base in accordance with Claim 6 or 7 characterised in that the cam surface (11) comprises part of the generally semi-circular surface (8).

9. A vehicle seat base in accordance with any one of Claims 6, 7 or 8, characterised in that the flat surface is provided with a further cam surface for wedging the projection into position in the aperture.

10. A vehicle seat base in accordance with any one of the preceding Claims 3-9 characterised by including at least one seat slide comprising a lower member (1) constructed to be fixed to the vehicle floor and an upper member (2) for carrying the seat and constructed and arranged to be slideable with respect to the lower member (1), the attachment projection (6) being provided on said lower member (1).

11. A vehicle seat slide characterised by comprising a lower member (1) constructed to be fixed to a vehicle floor, an upper member (2) constructed and arranged to be slideable with respect to the lower member (1), the lower member (1) having at least one attachment projection (6) which is freely insertable in a securing aperture (10) when the lower member (1) is generally tilted with respect to the plane of the aperture (20), and when the lower member (1) is rotated to a generally non-tilted position becomes wedged into the aperture (20) by the engagement of a cam surface (11) on the projection (6) with a side of the aperture (20).

12. A method of fitting a vehicle seat base to a vehicle floor characterised by comprising the steps of: forming at least one attachment projection (6) on said seat base; inserting the projection (6) into a securing aperture (20) formed in or on the vehicle floor or a bracket or member attached to or forming part of the floor; rotating the base to its fitted position whereby the projection (6) becomes wedged into the aperture (20) by engagement of a cam surface (11) on the projection (6) with a side of the aperture (20); and securing the base to the floor by securing means to hold the projection in its wedging engagement.

Fig. 1

Fig. 2

Fig. 3

Fig. 4